(19) Europäisches Patentamt
European Patent Office
Office européen des brevets

(11) **EP 1 856 345 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(21) Anmeldenummer: **06706884.1**

(22) Anmeldetag: **11.02.2006**

(51) Int Cl.:
***E04C 2/04*** *(2006.01)*

(86) Internationale Anmeldenummer:
**PCT/EP2006/001272**

(87) Internationale Veröffentlichungsnummer:
**WO 2006/089654 (31.08.2006 Gazette 2006/35)**

(54) **ANTIMIKROBIELL AUSGERÜSTETE GIPSBAUPLATTEN**

PLASTERBOARDS PROVIDED WITH ANTIMICROBIAL EFFECT

PLAQUES DE CONSTRUCTION EN PLATRE A TRAITEMENT ANTIMICROBIEN

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.02.2005 DE 102005008184**

(43) Veröffentlichungstag der Anmeldung:
**21.11.2007 Patentblatt 2007/47**

(73) Patentinhaber: **LANXESS Deutschland GmbH 50569 Köln (DE)**

(72) Erfinder:
• **WACHTLER, Peter
  47800 Krefeld (DE)**
• **KUGLER, Martin
  42799 Leichlingen (DE)**

(56) Entgegenhaltungen:
EP-A- 1 180 326        WO-A-03/104583
WO-A1-2006/074255   DE-A- 19 951 328
US-A- 3 509 083       US-A- 4 303 668
US-A1- 2003 234 068

**Beschreibung**

Die vorliegende Erfindung betrifft die Verwendung von o-Phenylphenol zur Herstellung von antimikrobiell ausgerüsteten Gipsbauplatten.

Gipsbauplatten stellen ein vielseitig verwendbares Baumaterial dar und bilden die Basis für den modernen und rationellen Trockenbau. Gipsbauplatten haben den Vorteil, dass sie sehr leicht zu verarbeiten und kostengünstig sind und insbesondere im Innenausbau das ideale Baumaterial zur raschen Umsetzung architektonischer und baulicher Veränderungen darstellen. Die wirtschaftliche Bedeutung von Gipsbauplatten ist erheblich.

Grundsätzlich bestehen Gipsbauplatten (Gipskartonplatten) aus einem Gipskern, der beidseitig mit einer Papier-oder Kartonplatte beklebt ist, die dem Gips Stabilität verleiht.

Der Gipskern besteht aus Gips, vorzugsweise Stuckgips, und Nebenbestandteilen wie z.B. Verdickern auf Stärkebasis. Der Stuckgips kann sowohl aus natürlichem Gips als auch aus technischen Gipsen calciniert werden. Demzufolge besteht der Gipskern hauptsächlich aus anorganischen Stoffen (Calciumsulfat) mit einem geringen, aber für die Funktionalität wichtigen Anteil organischer Bestandteile. Das den Gipskern umhüllende Paper kann einen größeren Flächengewichtsbereich überstreichen und kann zur Erzielung zusätzlicher Eigenschaften wie Feuerfestigkeit oder verbesserte Wasserbeständigkeit entsprechend konditioniert sein.

Ein Nachteil von Gipskartonplatten ist deren Empfindlichkeit gegenüber Feuchtigkeit, da diese einerseits die mechanischen Eigenschaften beeinträchtigen kann, und andererseits auch das Wachstum unerwünschter Mikroorganismen ermöglicht. Obwohl Gipskartonplatten, als Baumaterial für den Innenausbau, per se für ein trockenes Umfeld ausgelegt sind, können diese doch während ihres Lebenszyklus an verschiedenen Stellen in einen kürzer oder länger andauernden Kontakt mit Feuchtigkeit geraten. Dies kann bereits während der Lagerung frisch hergestellter, noch produktionsbedingte Restfeuchte enthaltender Platten geschehen, oder z.B. auch während der Austrocknung in neuen Gebäuden, durch Wasserschäden, durch Einbau in Feuchträume oder bedingt durch anhaltend hohe natürliche Luftfeuchtigkeit z.B. in tropischen Ländern. Unter den vorbeschriebenen widrigen Einsatzbedingungen kann es als Folge einer vorübergehenden oder länger andauernden Durchfeuchtung des Baumaterials zum Wachstum von Mikroorganismen (Bakterien, Schimmelpilze, Hefen) kommen, wobei insbesondere das Auftreten von Schimmelpilzen in der Praxis die größten Probleme bereitet.

Die unter feuchten Bedingungen gegebene Anfälligkeit von Gipskartonplatten für das unerwünschte Wachstum von Mikroorganismen erklärt sich aus der Anwesenheit organischer Bestandteile in diesem Baustoff. An erster Stelle ist hier die Präsenz von Stärke zu nennen, welche zum Halt der oberflächlich aufgebrachten Papierschichten beiträgt. Obwohl Stärke bezogen auf das Gesamtgewicht der Gipsplatte nur einen sehr geringen Anteil ausmacht, reicht dieses Nahrungsangebot, zusammen mit anderen möglichen organischen Additiven sowie dem weiterhin auf den Oberflächen anwesenden Papieren oder Kartonagen aus, das Wachstum von Mikroorganismen dauerhaft zu fördern und als Folge davon die Qualität des Baumaterials sowie der damit verbauten Räumlichkeiten nachhaltig zu mindern. Das unerwünschte Wachstum von Mikroorganismen, insbesondere von Pilzen auf der Oberfläche der Gipsbauplatten hat ein Reihe von Nachteilen zur Folge:

-   Mikroorganismen stellen eine ästhetische Beeinträchtigung der Gipsplatten dar

-   Durch Feuchterückhalt wird die mechanische Integrität der Platte beeinträchtigt und dadurch einem weiteren Mikroorganismenwachstum der Boden bereitet

-   Geruchliche Veränderungen

-   Das in der Literatur ausführlich beschriebene Phänomen des "sick building syndromes" wird unter anderem auf die Exposition mit Pilzsporen zurückgeführt. Insbesondere Personen mit einer ohnehin erhöhten Anfälligkeit gegenüber allergenen Agenzien können somit in Innenräumen mit durchfeuchteten Wänden auf Basis von Gipskartonplatten einem erhöhten gesundheitlichen Risiko ausgesetzt sein.

Es hat in der Vergangenheit nicht an Versuchen gefehlt, das beschriebene Problem des Befalls von Gipsbauplatten durch Mikroorganismen durch verschiedene Maßnahmen zu lösen, wie z.B. durch die Verwendung von antimikrobiellen Stoffen. Grundsätzlich können solche antimikrobiellen Stoffe oder Fungizide in den Gipskern eingearbeitet werden (vgl. z.B. US-A 3.918.981) oder in den an den Oberflächen befindlichen Papieren und Kartonagen homogenisiert werden (vgl. z.B. US-A 2003031898), gegebenenfalls kann auch eine kombinierte Ausrüstung beider Plattenbestandteile in Betracht kommen.

Diese aus dem Stand der Technik bekannten Verfahren gewährleisten jedoch den Schutz der Gipsbauplatten gegen mikrobiellen Befall nur bei Verwendung der Wirkstoffe in so hohen Konzentrationsbereichen ,dass ein unter wirtschaftlichen Gesichtspunkten vertretbarer Einsatz nicht möglich war und sich diese Verfahren daher im industriellen Maßstab nicht durchsetzten konnten.

In EP 1180326 A wird die biozide Verwendung von ortho-Phenylphenol (OPP) in technischen Materialien offenbart, jedoch werden keine Gipsbauplatten erwähnt. US 3509083 A und US 4303668 A offenbaren zwar die Verwendung von OPP in Gipsbauplatten, jedoch wird dort lediglich das Cellulosematerial mit OPP ausgerüstet, wonach nur die Papierdeckenschicht einer Gipsbauplatte gemeint sein kann. Aufgrund des hohen Dampfdrucks von OPP besitzt es eine hohe Migrationsrate in die Umgebung, sodass die biozide Wirksamkeit nur von kurzer Dauer ist.

Die Aufgabe der vorliegenden Erfindung bestand daher darin, antimikrobielle Wirkstoffe oder Wirkstoffgemische, Verfahren und Methoden bereitzustellen, die es ermöglichen Gipsbauplatten wirksam und langanhaltend gegen mikrobiellen Befall zu schützen bei gleichzeitig guter toxikologischer und ökotoxikologischer Verträglichkeit.

Überraschenderweise wurde nun gefunden, daß die geschilderte Aufgabe durch den Einsatz des Wirkstoffs o-Phenylphenol zur antimikrobiellen Ausrüstung von Gipsbauplatten gelöst werden kann.

Gegenstand der vorliegenden Erfindung ist daher die Verwendung von o-Phenylphenol, dessen Natrium- oder Kaliumsalzes oder Gemischen davon zum Schutz von Gipsbauplatten gegen Befall und/oder Zerstörung durch Mikroorganismen, wobei o-Phenylphenol, dessen Natrium- oder Kaliumsalze oder Gemische davon, in den Kern der Gipsbauplatte eingebracht werden.

Die in den Gipskern einzuarbeitenden Mengen an o-Phenylphenol (OPP), dessen Natrium- oder Kaliumsalze oder Gemische davon können variieren und hängen von verschiedenen Faktoren ab, wie z.B. der Dicke der jeweils auszurüstenden Platte, der mikrobiologischen Anfälligkeit des konkret zu schützenden Plattenmaterials, den klimatischen Bedingungen, oder bestimmten Charakteristika im verbauten Raum (Feuchteräume, Keller etc.).

Normalerweise erfolgt der erfindungsgemäße Einsatz von o-Phenylphenol (OPP) bzw. dessen Natrium- oder Kaliumsalzen oder Gemischen davon in einer solchen Menge, dass der Gipskern der Gipsbauplatte die genannten Wirkstoffe in einer Konzentration von 50 bis 3000 ppm, bevorzugt 100 bis 2000 ppm, besonders bevorzugt 250 - 1500 ppm bezogen auf das Trockengewicht des Gipskerns enthält.

Durch die erfindungsgemäße Verwendung wird die Beständigkeit der fertigen Gipsbauplatte unter einer hohen Schimmelpilzbelastung soweit verbessert, dass kein Wachstum von Pilzsporen auf einer erfindungsgemäß ausgerüsteten Platte zu beobachten ist, im Gegensatz zu einer nicht ausgerüsteten Platte (siehe Beispiel 1).

Durch Einbringen weiterer biozider Wirkstoffe in den Gipskern und/oder Papieranteil der Gipsbauplatte kann die Wirkung von o-Phenylphenol (OPP) bzw. dessen Natrium- oder Kaliumsalz optimiert werden. Zu diesem Zweck kommen vorzugsweise die folgenden fungizid wirksamen Komponenten A) in Frage:

- Carbendazim

- Iodpropargyl-butyl-carbamat

- NatriumPyrithion

- Propiconazole

- Tebuconazole

- Tetramethly-dithiocarbamat (Thiuram)

- Thiabendazol

- Zink-bis-dimethyldithiocarbamate (Ziram)

- ZinkPyrithion

Die erfindungsgemäß zu verwendenden Mischungen werden im allgemeinen in einer solchen Menge eingesetzt, dass der Gipskern der fertigen Gipsbauplatte eine Konzentration vorzugsweise von 50 -1000 ppm an OPP bzw. dessen Natrium- oder Kaliumsalzen oder Gemischen davon, und von 50 - 2000 ppm an mindestens einem weitern bioziden Wirkstoff A) aufweist.

Insbesondere bevorzugt ist die erfindungsgemäße Verwendung einer Mischung aus i) o-Phenylphenol, dessen Natrium- oder Kaliumsalzen oder Gemischen davon und ii) Thiabendazol. Diese Mischung zeichnet sich durch eine synergistische Wirkungsverstärkung aus, d.h. die fungizide Wirkstärke der synergistischen Mischungen ist unerwarteter Weise höher als die Summe der fungiziden Wirkstärke der jeweiligen Fungizide allein.

Die erfmdungsgemäß zu verwendenden synergistische Mischung enthält die Wirkstoffe i) zu ii) im Verhältnis 250:1 bis 1: 250, bevorzugt 125:1 bis 1:125, insbesondere 100:1 bis 1:100.

Bei der erfindungsgemäßen Verwendung wird im allgemeinen der Wirkstoff o-Phenylphenol, dessen Natrium- oder Kaliumsalze oder Gemische davon, sowie gegebenenfalls weitere fungizide Wirkstoffe A) während des Herstellungsprozesses der Gipsbauplatten mit der Gipsslurry vermischt. Dabei ist es möglich den Wirkstoff o-Phenylphenol (OPP) bzw. dessen Natrium oder Kaliumsalz sowie die gegebenenfalls zuzusetzenden weiteren Wirkstoffe A) in verschiedenen, dem Fachmann vetrauten Formen der Gipsslurry zuzusetzen. So kann der Wirkstoff o-Phenylphenol (OPP) bzw. dessen Natrium- oder Kaliumsalze z.B. in festem Zustand oder in Wasser, Alkalilaugen oder in Lösemitteln gelöst oder dispergiert der Gipsslurry zugesetzt werden.

Die erfindungsgemäße zu verwendenden Mischungen aus o-Phenylphenol, dessen Natrium- oder Kaliumsalzes oder Gemischen davon mit mindestens einem weiteren fungiziden Wirkstoff A) kann in Abhängigkeit von den jeweiligen physikalischen und/oder chemischen Eigenschaften der einzelnen Wirkstoffe bzw. den spezifischen Erfordernissen des zu lösenden Konservierungsproblems, entweder separat in Form einer Zudosierung der Einzelwirkstoffe zu der Gipsslurry erfolgen, wobei je nach vorliegendem Konservierungsproblem eine individuelle Einstellung des Konzentrationsverhältnisses vorgenommen werden kann, oder es kann die zum Schutz der Gipsbauplatten benötigte Wirkstofffinischung als fertig formuliertes Produkt der Gipsslurry während des Herstellungsprozesses der Gipsbauplatten zugegeben werden.

Die erfindungsgemäß zu verwendende Mischung oder der Wirkstoff o-Phenylphenol (OPP) bzw. dessen Natrium oder Kaliumsalz kann zuvor in eine übliche Formulierung wie z.B. in eine Lösung, Emulsion, Suspension, ein Pulver, einen Schaum, in Pasten, Granulate, Aerosole und in feinstverkapselter Form in polymere Stoffen, überführt werden.

Diese Formulierungen können in an sich bekannter Weise hergestellt werden, z.B. durch Vermischen der erfindungsgemäßen Mischung oder der darin enthaltenen Einzelwirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel zusätzlich als Hilfslösungsmittel verwendet werden. Als flüssige Lösungsmittel kommen im wesentlichen infrage: Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid, N-Methyl-pyrrolidon oder Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Polyacrylate.

Es können in den Formulierungen Haftmittel und Verdicker wie Carboxymethylcellulose, Methylcellulose, natürliche und synthetische, pulverige, körnige oder latexförmige Polymere venvendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die Einarbeitung der fungizid wirksamen Komponenten A) in die den Gipskern umhüllenden Karton- oder Papierschichten kann gemäß einer dem Fachmann bekannten Methoden erfolgen, wie z.B. durch Zugabe in den Stoffauflauf der Papiermaschine, durch Einarbeitung über die Leimpresse, durch Zugabe zu Streichfarben oder durch Aufsprühen. Die im Einzelfall anzuwendende Einarbeitungsmethode hängt vom ausgesuchten Wirkstoff, der jeweligen Zubereitungsform (fest, dispergiert, gelöst, emulgiert) sowie den betrieblich vorgegebenen Randbedingungen ab. In einer bevorzugten Ausführungsform der Erfindung wird die Herstellung der fungiziden Kartonagen oder Papiere bereits während der Papierherstellung erfolgen und nicht im Verlauf der Endfertigung der Gipsbauplatten.

**Anwendungsbeispiele**

**Beispiel 1**

Zur Überprüfung der Wirksamkeit einer im Gipskern mit OPP ausgerüsteten Gipsbauplatte wurde die Beständigkeit im Labor nach Beimpfung mit einem Pilzgemisch untersucht. Zu diesem Zweck werden Gipskartonplattenmuster mit den Maßen 14 x 5 cm in 1 Liter Pulverflaschen überführt und am Flaschendeckel aufgehängt. Beim Start des Versuches werden die so vorbereiteten Prüflinge zur Simulation eines starken Pilzbefalls einmalig in ein Gemisch aus folgenden Schimmelpilzen getaucht:

- *Penicillium glaucum*

- *Chaetomium globosum*

- *Aspergillus niger*

- *Aureobasidium pullulans*

Diese Schimmelpilzarten sind dem Fachmann wohlvertraute Materialschädlinge und somit für eine qualifizierende Aussage über den Grad des antimikrobiellen Schutzes eines mit einem OPP bzw. dessen Natrium-oder Kaliumsalz und ggf. weiterer Wirkstoffkomponenten ausgerüsteten Produktes geeignet. Die Lagerung der Musterplatten erfolgt bei Raumtemperatur über einen Zeitraum von bis zu 8 Wochen, wobei durch Aufrechterhalten der anfänglichen Wassermenge am Boden des Gefäßes kontinuierlich für eine Wasserdampf-gesättigte Atmosphäre gesorgt wird (wobei ein direkter Kontakt zwischen Gipsplatte und Wasser nicht erfolgen darf). Die Abmusterung der Prüflinge erfolgt zu bestimmten Zeitpunkten und wird nach folgendem Bewertungsschema vorgenommen:

0 = kein Bewuchs auf der Oberfläche

1 = geringer Bewuchs (< 10 % der Oberfläche befallen)

2 = mittlerer Bewuchs (< 50 % der Oberfläche befallen)

3 = starker Bewuchs auf der Oberfläche

**Ergebnisse**

Mikrobiologische Widerstandsfähigkeit einer einmalig kontaminierten Gipsbauplatte in feuchter Umgebung

**Tabelle 1**

| Menge OPP im Gipskern der Gipskartonplatte | Bewertung | | | |
| --- | --- | --- | --- | --- |
| | **1 Wochen** | **3** | **4** | **8** |
| 0 ppm | 0/0 | 3/3 | 3/3 | 3/3 |
| 300 ppm | 0/0 | 0/0 | 0/0 | 0/0 |
| 500 ppm | 0/0 | 0/0 | 0/0 | 0/0 |
| 750 ppm | 0/0 | 0/0 | 0/0 | 0/0 |

In diesem Test wurde unter den beschriebenen Versuchsbedingungen eine gute Wirksamkeit von OPP bereits ab einer Einsatzkonzentration von 300 ppm o-Phenylphenol (OPP), bez. auf das Gewicht des Gipskerns, festgestellt. Somit verfügt eine mit dieser Menge an o-Phenylphenol im Gipskern ausgerüstete Gipsbauplatte unter den Bedingungen des hier beschriebenen Versuches über eine hohe Resistenz gegenüber dem Angriff materialschädigender Mikroorganismen, insbesondere von Schimmelpilzen.

**Beispiel 2**

Zur Verbesserung der Gesamtperformance einer antimikrobiellen Ausrüstung ist der Einsatz von Wirkstoffgemischen üblich, um z.B. Wirkungslücken einer Komponente auszugleichen oder die Kosten einer Konservierung zu optimieren. Untersucht wurde eine erfindungsgemäße Mischung aus OPP und der zweiten fungiziden Komponente Thiabendazole, wobei gegen bestimmte, insbesondere praxisrelevante Keime wie z.B. *Aspergillus flavus* (Tabelle 2), ein überraschend hoher, synergistische Effekt gefunden wurde, d.h. die Wirksamkeit der Mischung ist besser als dies aus der Wirksamkeit der Einzelkomponenten abzuleiten wäre.

Der gefundene Synergismus der erfindungsgemäßen Mischungen lässt sich über folgenden mathematischen Ansatz ermitteln (vgl. F.C. Kull, P.C. Elisman, H.D. Sylwestrowicz and P.K. Mayer, Appl. Microbiol. 9, 538 (1961):

$$\text{synergistischer Index (SI)} = \frac{Q_a}{Q_A} + \frac{Q_b}{Q_B}$$

mit

$Q_a$ = Menge Komponente A in der Wirkstoffmischung, die den gewünschten Effekt, d.h. kein mikrobielles Wachstum, erzielt,

$Q_A$ = Menge Komponente A, die allein eingesetzt, das Wachstum der Mikroorganismen unterdrückt,

$Q_b$ = Menge Komponente B in der Wirkstoffmischung, die das Wachstum der Mikroorganismen unterdrückt,

$Q_B$ = Menge Komponente B, die allein eingesetzt, das Wachstum der Mikroorganismen unterdrückt.

**Synergismus o-Phenylphenol (OPP) / Thiabendazole (TBZ)**

Mit dem Testkeim *Aspergillus flavus* wurden die minimalen Hemmkonzentration der in Tabelle 2 aufgeführten Wirkstoffkombinationen untersucht

<div align="center">

**Tabelle 2**

</div>

| Aspergillus flavus | | |
|---|---|---|
| Menge der reinen Wirkstoffe, die das Wachstum unterdrücken (in ppm) | | SI |
| A = OPP | $(Q_A)$ = 100 | |
| B = TBZ | $(Q_B)$ = 500 | |
| Mengenanteile in den Wirkstoffmischungen, die das Wachstum unterdrücken (in ppm) | | |
| OPP/TBZ (=9:1)* | $(Q_a/ Q_A)$ = 0,9 / $(Q_b/ Q_B)$ = 0,02 | 0,92 |
| OPP/TBZ (=8:2)* | $(Q_a/ Q_A)$ = 0,4 / $(Q_b/ Q_B)$ = 0,02 | 0,42 |
| OPP / TBZ (=7:3)* | $(Q_a/ Q_A)$ = 0,35 / $(Q_b/ Q_B)$ = 0,03 | 0,38 |
| OPP / TBZ (=6:4)* | $(Q_a/ Q_A)$ = 0,3 / $(Q_b/ Q_B)$ = 0,04 | 0,34 |
| OPP / TBZ (=5:5)* | $(Q_a/ Q_A)$ = 0,25 $(Q_b/ Q_B)$ = 0,05 | 0,30 |
| OPP / TBZ (=4:6)* | $(Q_a/ Q_A)$ = 0,2 / $(Q_b/ Q_B)$ = 0,06 | 0,26 |
| OPP / TBZ (=3:7)* | $(Q_a/ Q_A)$ = 0,15 / $(Q_b/ Q_B)$ =0,07 | 0,22 |
| OPP / TBZ (=2:8)* | $(Q_a/ Q_A)$ = 0,1 / $(Q_b/ Q_B)$ = 0,08 | 0,18 |
| OPP / TBZ (=1:9) | $(Q_a/ Q_A)$ = 0,05 / $(Q_b/ Q_B)$ = 0,09 | 0,14 |
| (* = Gewichtsverhältnisse der Wirkstoffe in der Mischung) | | |

Die erfindungsgemäßen Kombinationen weisen in bestimmten Konzentrationsverhältnissen eine ausgeprägte synergistische Wirkung auf. Die Einarbeitung eines Gemisch aus OPP und TBZ in den Gipskern führt demnach zu einer Verbesserung der mit OPP alleine schon erreichbaren Wirkung. Alternativ hierzu kann auch eine bestimmte Menge OPP in den Gipskern eingearbeitet werden und zur Wirkungsverstärkung eine fungizide Ausrüstung mit TBZ in einer oder in beiden Papierdeckschichten erfolgen.

**Patentansprüche**

**1.**  Verwendung von o-Phenylphenol, dessen Natrium- oder Kaliumsalzes oder Gemischen davon zum Schutz von Gipsbauplatten, enthaltend einen Gipskern sowie diesen umgebende Papier- oder Kartondeckschichten, gegen Befall und/oder Zerstörung durch Mikroorganismen, wobei o-Phenylphenol und/oder dessen Natrium-oder Kaliumsalze oder Gemische davon, in den Gipskern eingearbeitet werden.

2. Verwendung gemäß Anspruch 1 , **dadurch gekennzeichnet, dass** o-Phenylphenol, dessen Natrium- oder Kaliumsalze oder Gemische davon, in einer Konzentration von 50 bis 3000 ppm bezogen auf das Trockengewicht des Gipskerns in den Gipskern eingearbeitet wird.

3. Verwendung gemäß wenigstens einem der Ansprüche 1 bis 2, **dadurch gekennzeichnet, dass** mindestens ein weiterer biozider Wirkstoff A) in den Gipskern und/oder die Papier- oder Kartondeckschicht eingearbeitet wird.

4. Verwendung gemäß wenigstens einem der Ansprüche 1 bis 3, **dadurch gekennzeichnet, dass** als weiterer Wirkstoff A) mindestens eine Verbindung aus der Reihe Carbendazim, Iodpropargyl-butyl-carbamat, NatriumPyrithion, Propiconazole, Tebuconazole, Tetramethyl-dithiocarbamat (Thiuram), Thiabendazol, Zink-bis-dimethyldithiocarbamate (Ziram) und ZinkPyrithion in den Gipskern und/oder die Papier- oder Kartondeckschicht eingearbeitet wird.

5. Verwendung gemäß wenigstens einem der Ansprüche 1 bis 4, **dadurch gekennzeichnet, dass** OPP und/oder dessen Natrium- oder Kaliumsalze oder Gemische davon in einer Konzentration von 50 - 1000 ppm in den Gipskern eingearbeitet wird und mindestens ein weiterer biozider Wirkstoff A) aus der Reihe Carbendazim, Iodpropargyl-butyl-carbamat, NatriumPyrithion, Propiconazole, Tebuconazole, Tetramethyl-dithiocarbamat (Thiuram), Thiabendazol, Zink-bis-dimethyldithiocarbamate (Ziram) und ZinkPyrithion in einer Konzentration von 50 - 2000 ppm in den Gipskern und/oder in die Papier- oder Kartondeckschicht eingearbeitet wird.

6. Verwendung gemäß wenigstens einem der Ansprüche 1 bis 5, **dadurch gekennzeichnet, dass** o-Phenylphenol und/oder dessen Natrium- oder Kaliumsalze oder Gemische davon in den Gipskern und Thiabendazol in den Gipskern und/oder die Papier- oder Kartondeckschicht eingearbeitet wird.

7. Antimikrobiell ausgerüstete Gipsbauplatte umfassend einen Gipskern und diesen umschließende Papier- oder Kartondeckschichten, enthaltend o-Phenylphenol und/oder dessen Natrium- oder Kaliumsalze oder Gemische davon im Kern der Gipsbauplatte und gegebenfalls einen oder mehrere biozide Wirkstoffe aus der Reihe Carbendazim, Iodpropargyl-butyl-carbamat, Natrium-Pyrithion, Propiconazole, Tebuconazole, Tetramethly-dithiocarbamat (Thiuram), Thiabendazol, Zink-bis-dimethyldithiocarbamate (Ziram) und ZinkPyrithion im Gipskern und/oder in einer oder beiden Papier- oder Kartondeckschichten.

## Claims

1. Use of o-phenylphenol, the sodium or potassium salts thereof or mixtures thereof for protecting plasterboards, containing a gypsum core and paper or cardboard outer layers surrounding said core, from attack and/or destruction by micro-organisms, wherein o-phenylphenol and/or the sodium or potassium salts thereof or mixtures thereof are incorporated into the gypsum core.

2. Use according to Claim 1, **characterized in that** o-phenylphenol, the sodium or potassium salts thereof or mixtures thereof is or are incorporated into the gypsum core in a concentration of 50 to 3000 ppm, based on the dry weight of the gypsum core.

3. Use according to at least one of Claims 1 to 2, **characterized in that** at least one further biocidal active substance A) is incorporated into the gypsum core and/or the paper or cardboard outer layer.

4. Use according to at least one of Claims 1 to 3, **characterized in that** at least one compound from the series consisting of carbendazim, iodopropargyl butylcarbamate, sodium pyrithione, propiconazole, tebuconazole, tetramethyl dithiocarbamate (thiuram), thiabendazole, zinc bisdimethyldithiocarbamate (ziram) and zinc pyrithione is incorporated into the gypsum core and/or the paper or cardboard outer layer as further active substance A).

5. Use according to at least one of Claims 1 to 4, **characterized in that** OPP and/or the sodium or potassium salts thereof or mixtures thereof are incorporated in a concentration of 50-1000 ppm into the gypsum core and at least one further biocidal active substance A) from the series consisting of carbendazim, isopropargyl butylcarbamate, sodium pyrithione, propiconazole, tebuconazole, tetramethyl dithiocarbamate (thiuram), thiabendazole, zinc bisdimethylthiocarbamate (ziram) and zinc pyrithione is incorporated in a concentration of 50-2000 ppm into the gypsum core and/or into the paper or cardboard outer layer.

6. Use according to at least one of Claims 1 to 5, **characterized in that** o-phenylphenol and/or the sodium or potassium salts thereof or mixtures thereof are incorporated into the gypsum core and thiabendazole is incorporated into the gypsum core and/ or the paper or cardboard outer layer.

7. Antimicrobially treated plasterboard comprising a gypsum core and paper or cardboard outer layers surrounding said core, containing o-phenylphenol and/or the sodium or potassium salts thereof or mixtures thereof in the core of the plasterboard and optionally one or more biocidal active substances from the series consisting of carbendazim, iodopropargyl butylcarbamate, sodium pyrithione, propiconazole, tebuconazole, tetramethyl dithiocarbamate (thiuram), thiabendazole, zinc bisdimethyldithiocarbamate (ziram) and zinc pyrithione in the gypsum core and/or in one or both paper or cardboard outer layers.

**Revendications**

1. Utilisation d'o-phénylphénol, de son sel sodique ou de son sel potassique ou de mélanges de ceux-ci pour la protection de plaques de plâtre, contenant un noyau de plâtre ainsi que des couches de recouvrement en papier ou en carton l'entourant, contre une attaque et/ou une dégradation par des micro-organismes, l'o-phénylphénol et/ou son sel sodique ou son sel potassique ou des mélanges de ceux-ci étant incorporé(s) dans le noyau de plâtre.

2. Utilisation selon la revendication 1, **caractérisée en ce que** l'o-phénylphénol, son sel sodique ou son sel potassique ou des mélanges de ceux-ci est/sont incorporé(s) dans le noyau de plâtre en une concentration de 50 à 3000 ppm par rapport au poids sec du noyau de plâtre.

3. Utilisation selon au moins l'une quelconque des revendications 1 à 2, **caractérisée en ce qu'**au moins une autre substance active biocide A) est incorporée dans le noyau de plâtre et/ou dans la couche de recouvrement en papier ou en carton.

4. Utilisation selon au moins l'une quelconque des revendications 1 à 3, **caractérisée en ce qu'**on incorpore, comme autre substance active A), au moins un composé de la série carbendazime, butylcarbamate d'iodopropargyle, pyrithione de sodium, propiconazole, tébuconazole, dithiocarbamate de tétraméthyle (Thiuram), thiabendazole, bis(diméthyldithiocarbamate) de zinc (Ziram) et pyrithione de zinc dans le noyau de plâtre et/ou dans la couche de recouvrement en papier ou en carton.

5. Utilisation selon au moins l'une quelconque des revendications 1 à 4, **caractérisée en ce que** l'OPP et/ou son sel de sodium ou son sel de potassium ou des mélanges de ceux-ci est/sont incorporé(s) en une concentration de 50-1000 ppm dans le noyau de plâtre et au moins une autre substance active biocide A) de la série carbendazime, butylcarbamate d'iodopropargyle, pyrithion sodium, propiconazole, tébuconazole, dithiocarbamate de tétraméthyle (Thiuram), thiabendazole, bis(diméthyldithiocarbamate) de zinc (Ziram) et pyrithion-zinc est incorporée en une concentration de 50-2000 ppm dans le noyau de plâtre et/ou dans la couche de recouvrement en papier ou en carton.

6. Utilisation selon au moins l'une quelconque des revendications 1 à 5, **caractérisée en ce que** l'o-phénylphénol et/ou son sel de sodium ou son sel de potassium ou des mélanges de ceux-ci est/sont incorporé(s) dans le noyau de plâtre et du thiabendazole est incorporé dans le noyau de plâtre et/ou dans la couche de recouvrement en papier ou en carton.

7. Plaque de plâtre apprêtée de manière antimicrobienne, comprenant un noyau de plâtre et des couches de recouvrement en papier ou en carton l'entourant, contenant de l'o-phénylphénol et/ou son sel de sodium ou son sel de potassium ou des mélanges de ceux-ci dans le noyau de la plaque de plâtre et le cas échéant une ou plusieurs substance(s) active(s) biocide(s) de la série carbendazime, butylcarbamate d'iodopropargyle, pyrithione de sodium, propiconazole, tébuconazole, dithiocarbamate de tétraméthyle (Thiuram), thiabendazole, bis(diméthyldithiocarbamate) de zinc (Ziram) et pyrithione de zinc dans le noyau de plâtre et/ou dans une ou les deux couche(s) de recouvrement en papier ou en carton.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3918981 A
- US 2003031898 A
- EP 1180326 A
- US 3509083 A
- US 4303668 A

**In der Beschreibung aufgeführte Nicht-Patentliteratur**

- **F.C. KULL ; P.C. ELISMAN ; H.D. SYLWESTROWICZ ; P.K. MAYER.** *Appl. Microbiol.,* 1961, vol. 9, 538